# EUROPÄISCHE PATENTANMELDUNG

(11) **EP 2 237 234 A1**
(43) Veröffentlichungstag der Anmeldung: **06.10.2010**
(21) Anmeldenummer: 09157266.9
(22) Anmeldetag: 03.04.2009
(51) Int. Cl.: G07C 9/00

(54) **Verfahren und Vorrichtung zur Zugangskontrolle**

(71) Anmelder: Inventio AG, 6052 Hergiswil (CH)
(72) Erfinder: Mizon, John, 6330, Cham (CH)

(57) **Zusammenfassung**

Das Verfahren zur Zugangskontrolle umfasst folgende Schritte. Mit einem Mobiltelefon (1) wird an einen Zugangsknoten (2) ein Identifikationscode (ID) gesendet. Falls der Identifikationscode (ID) als gültig erkannt wird, wird vom Zugangsknoten (2) an das Mobiltelefon (1) ein Zugangscode (6; 7) gesendet und auf der Anzeige (1.1) des Mobiltelefons (1) dargestellt. Mit einer Kamera (5) wird der Zugangscode (6; 7) erfasst, und falls der Zugangscode (6; 7) als gültig erkannt wird, wird der Zugang gewährt.

## Beschreibung

### Technisches Gebiet

Die Erfindung betrifft ein Verfahren und eine Vorrichtung zur Zugangskontrolle.

### Stand der Technik

Aus der Druckschrift WO 2006/000618 A2 ist ein Verfahren zur drahtlosen Eingabe eines Zielrufs für einen Aufzug bekannt. Dabei wird in einem ersten Schritt zwischen dem Mobiltelefon der Person, die mit dem Mobiltelefon eine Aufzugskabine angefordert hat, und der Aufzugsteuerung eine drahtlose Verbindung aufgebaut. In einem zweiten Schritt wird von der Aufzugssteuerung die Person und das Stockwerk auf dem sich die Person befindet, identifiziert und das zu dieser Person gehörende Benutzerprofil ausgewählt. Anschliessend ermittelt die Aufzugssteuerung anhand des Benutzerprofils das Zielstockwerk und sorgt dafür, dass für die Person eine Aufzugskabine auf dem Stockwerk, auf dem sie sich befindet, bereit gestellt und danach das Zielstockwerk angefahren wird.

Aus der Druckschrift JP 2005-280882 ist ein Aufzug mit einem Sicherheitssystem bekannt, bei dem ein Mobiltelefon zur Identifikation einer Person benutzt wird. Damit die Person Zugang zum Aufzug erhält, wird die auf dem Anzeigefeld des Mobiltelefons angezeigte Identifikationsnummer mit einem optischen Lesegerät erfasst und an eine Identifikationseinheit weitergeleitet. Wenn die Identifikationsnummer und damit die Person bei der Identifikationseinheit registriert ist, wird dieser Person Zugang zum Aufzug gewährt.

### Darstellung der Erfindung

Eine Aufgabe der Erfindung ist es, ein Verfahren und eine Vorrichtung zur Zugangskontrolle zu einem Gebäude, einem Gebäudebereich, einem Raum, einer Aufzugskabine oder einem Aufzug anzugeben. Dabei soll sichergestellt werden, dass nur jene Personen Zugang erhalten, die auch wirklich zugangsberechtigt sind. Eine Manipulation zum Zwecke des Missbrauchs soll weitestgehend ausgeschlossen sein.

Die Aufgabe wird durch ein Verfahren zur Zugangskontrolle mit den Merkmalen gemäss Patentanspruch 1 gelöst.

Das erfindungsgemässe Verfahren zur Zugangskontrolle umfasst folgende Schritte. Mit einem Mobiltelefon wird an einen Zugangsknoten ein Identifikationscode gesendet. Falls der Identifikationscode als gültig erkannt wird, wird vom Zugangsknoten an das Mobiltelefon ein Zugangscode gesendet und auf der Anzeige des Mobiltelefons dargestellt. Mit einer Kamera wird der Zugangscode erfasst, und falls der Zugangscode als gültig erkannt wird, wird der Zugang gewährt.

Vorteilhafte Weiterbildungen der Erfindung ergeben sich aus den in den abhängigen Patentansprüchen angegebenen Merkmalen.

Bei einer Ausführungsform des erfindungsgemässen Verfahrens ist der Identifikationscode die Telefonnummer des Mobiltelefons.

Bei einer weiteren Ausführungsform des erfindungsgemässen Verfahrens ist der Zugangscode ein zweidimensionaler optischer Code.

Bei einer dritten Ausführungsform des erfindungsgemässen Verfahrens ist der Zugangscode ein Data Matrix Code oder ein QR Code.

Darüber hinaus kann bei dem erfindungsgemässen Verfahren vorgesehen sein, dass der Identifikationscode vom Zugangsknoten an eine Steuereinheit geleitet wird, die dann prüft, ob der Identifikationscode in einer Liste mit zulässigen Identifikationscodes enthalten ist. Falls dies der Fall ist, wird der Zugangscode an den Zugangsknoten geleitet.

Zudem kann es von Vorteil sein, wenn bei dem Verfahren zur Zugangskontrolle ein Aufzug zur Benutzung freigegeben wird, wenn der Zugang gewährt wurde.

Bei einer Weiterbildung des erfindungsgemässen Verfahrens ist der Zugangscode zeitlich beschränkt gültig. Dadurch wird die Gefahr eines Missbrauchs weiter reduziert.

Bei einer anderen Weiterbildung des erfindungsgemässen Verfahrens ist der Zugangscode nur einmal verwendbar. Dadurch wird die Gefahr eines Missbrauchs weiter reduziert. Das erfindungsgemässe Verfahren kann zur Zugangskontrolle zu einem Gebäude, einem Gebäudebereich, einer Aufzugskabine oder einem Aufzug verwendet werden.

Die erfindungsgemässe Vorrichtung zur Durchführung des Verfahrens zur Zugangskontrolle umfasst ein Mobiltelefon und einen Zugangsknoten, der derart ausgebildet und betreibbar ist, dass er den Identifikationscode des Mobiltelefons empfangen und dem Mobiltelefon den Zugangscode übermitteln kann. Die Vorrichtung umfasst zudem eine Steuereinheit, die derart ausgebildet und betreibbar ist, dass sie den Identifikationscode überprüfen und den Zugangscode generieren kann. Des weiteren ist ein optisches Lesegerät vorgesehen, das mit der Steuereinheit verbunden ist.

Bei der erfindungsgemässen Vorrichtung kann das optische Lesegerät ein Scanner oder eine Kamera sein.

Schliesslich wird ein Computerprogrammprodukt vorgeschlagen, das auf einem von einem Computer benutzbaren Medium gespeichert ist, das für den Computer lesbaren Programmcode enthält, und das dafür sorgt, dass der Computer das beschriebene Verfahren zur Zugangskontrolle durchführt. Der Computer kann Teil der Steuereinheit oder des Zugangsknotens sein.

### Kurze Beschreibung der Zeichnungen

Im Folgenden wird die Erfindung mit mehreren Ausführungsbeispielen anhand von vier Figuren weiter erläutert.
- Figur 1: zeigt in Form eines Blockdiagramms eine mögliche Ausführungsform der erfindungsgemässen Vorrich- tung zur Zugangskontrolle.
- Figur 2: zeigt ein Beispiel für einen Data Matrix Code.
- Figur 3: zeigt ein Beispiel für einen QR Code.
- Figur 4: zeigt ein Flussdiagramm zur Veranschaulichung des erfindungsgemässen Verfahrens zur Zugangskontrol- le.

### Wege zur Ausführung der Erfindung

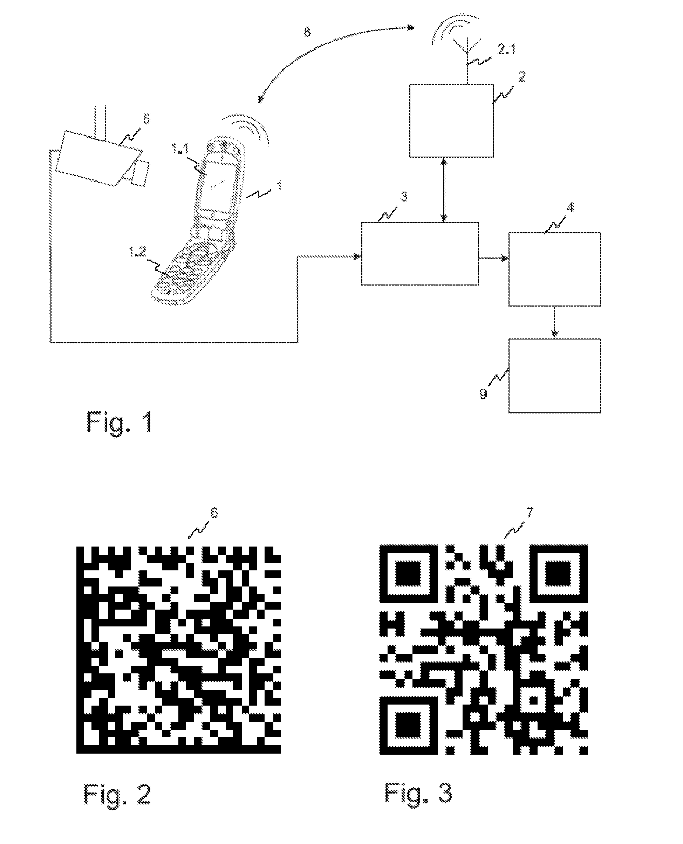

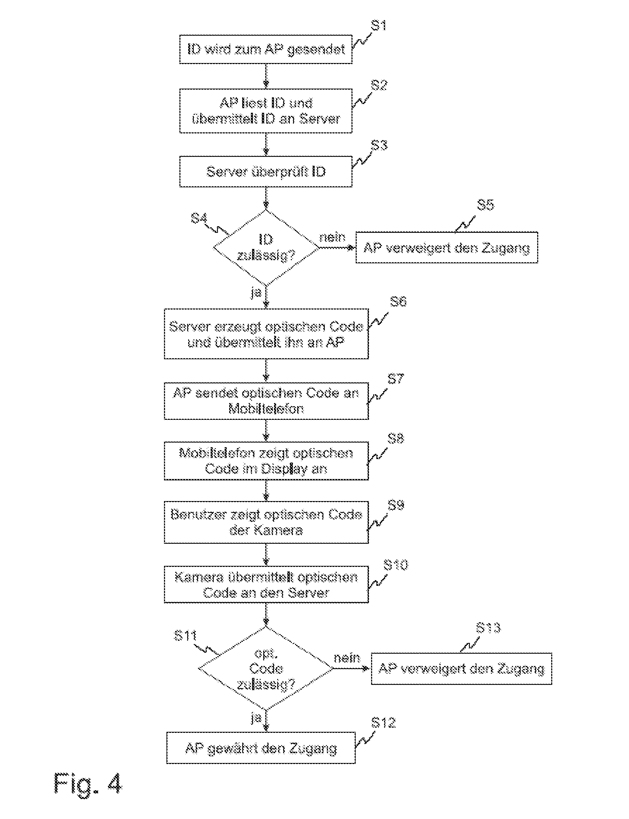

Im Folgenden wird eine Ausführungsform der Erfindung anhand der Figuren 1 und 4 erläutert. In Figur 1 ist in Form eines Blockdiagramms eine mögliche Ausführungsform der erfindungsgemässen Vorrichtung zur Zugangskontrolle dargestellt. Figur 4 zeigt das Flussdiagramm zur Veranschaulichung einer Ausführungsform des erfindungsgemässen Verfahrens zur Zugangskontrolle.

Damit eine Person einen Zutritt oder Zugang zu einem Gebäude, einem Gebäudebereich, wie beispielsweise einem Raum oder einem Aufzug 9 erhält, kann sich die Person mit ihrem Mobiltelefon 1 bei einem entsprechenden Zugangsknoten 2, welcher im Folgenden auch als Access Point AP bezeichnet wird, identifizieren. Sobald die Person mit ihrem Mobiltelefon 1 in die Reichweite des Zugangsknotens 2 gelangt, wird über eine Funkverbindung 8 ein Identifikationscode ID vom Mobiltelefon 1 an den Zugangsknoten 2 gesendet (Schritt S1).

Die Funkverbindung 8 kann beispielsweise über Bluetooth erfolgen. Bluetooth ist ein Standard gemäss IEEE 802.15.1 und dient der kabellosen Vernetzung von Geräten über eine kurze Distanz. Bluetooth bildet dabei die Schnittstelle, über die das Mobiltelefon 1 und der Zugangsknoten 2 miteinander kommunizieren können.

Der Zugangsknoten 2 ist dazu mit einer entsprechenden Antenne 2.1 ausgestattet. Nachdem der Zugangsknoten 2 den Identifikationscode ID empfangen hat, leitet er ihn an eine Steuereinheit 3 weiter (Schritt S2). Die Steuereinheit 3 kann beispielsweise ein Server sein. Der Zugangsknoten 2 und die Steuereinheit 3 sind in der Regel räumlich getrennt angeordnet. Dies ist aber nicht zwingend. In einem Gebäude können sich auch mehrere Zugangsknoten 2 befinden, die dann allesamt mit der Steuereinheit 3 verbunden sind.

Der Identifikationscode ID ist vorteilhafter Weise die Telefonnummer des Mobiltelefons 1. Es kann aber auch vorgesehen sein, dass die Person, die das Mobiltelefon 1 benutzt, einen bestimmten Code, beispielsweise ein Passwort, über die Tastatur 1.2 des Mobiltelefons 1 eingeben muss, der dann über die Funkverbindung 8 an den Zugangsknoten 2 übermittelt wird. In diesem Fall entspricht der über die Tastatur 1.2 eingegebene Code dem Identifikationscode ID.

In einem weiteren Schritt S3 überprüft der Server 3 den empfangenen Identifikationscode ID. Falls der Identifikationscode ID nicht als zulässig erachtet wird (Schritt S4), wird vom Server 3 dem Zugangsknoten 2 mitgeteilt, dass der Person der Zugang zu einem bestimmten Equipment, wie beispielsweise einem Aufzug 9 zu verweigern ist (Schritt S5). Falls der Identifikationscode ID hingegen als zulässig erachtet wird (Schritt S4), generiert der Server 3 einen Zugangscode (Schritt S6) und übermittelt diesen an den Zugangsknoten 2. Der Zugangscode wird im Folgenden auch als optischer Code bezeichnet.

Der Zugangscode kann zeitlich beschränkt gültig sein. Dadurch wird erreicht, dass einer Person nur für eine gewisse Zeitspanne der Zugang gewährt wird. Zudem kann vorgesehen sein, dass der Zugangscode nur ein einziges Mal gültig ist, so dass er, nachdem er einmal benutzt wurde, kein weiteres Mal mehr benutzt werden kann. Dadurch wird Missbrauch verhindert. So kann das Mobiltelefon 1 von keiner weiteren Person benutzt werden, um sich mit dem selben Zugangscode Zugang zu verschaffen.

Des Weiteren kann folgendes vorgesehen sein. Sobald der Person, die das Mobiltelefon 1 bei sich trägt, der Zugang gewährt wurde, wird für eine bestimmte Zeitdauer und/oder für einen bestimmten Zugangsknoten ein weiterer Zugang mit dem selben Mobiltelefon 1 gesperrt. Dadurch wird verhindert, dass das Mobiltelefon 1 einer anderen Person überreicht wird, die sich dann mit diesem Mobiltelefon Zugang verschafft.

Als Zugangscode kann vom Server 3 beispielsweise ein Data Matrix Code 6 generiert werden. Figur 2 zeigt ein Beispiel für einen solchen Data Matrix Code 6. Der Begriff Code bedeutet in diesem Zusammenhang nicht die Verschlüsselung von Daten, um diese geheim zu halten, sondern die grafische Abbildung der Daten in binären Symbolen. Der Data Matrix Code ist ein zweidimensionaler Barcode oder 2D-Code, der in verschiedenen Code-Schemata, zum Beispiel "ECC n" existiert. ECC steht für Error Checking and Correction Algorithm und das nachfolgende n für einen Wert zwischen 0 und 200. Das am sichersten lesbare Codeschema ist das Schema ECC 200. Die Grösse des quadratischen oder auch rechteckigen Codebildes wird aus einer grossen Auswahlmenge bestimmt, die Symbol-Elemente des Codebildes sind quadratisch oder rund. Der Data Matrix Code ist bei der Internationalen Organisation für Normung (ISO) genormt und in den ISO Spezifikationen ISO/IEC 16022:2000 und ISO/IEC 24720:2006 sowie in weiteren Normen für Anwendungen beschrieben, wie beispielsweise in DIN-Normen und DIN-EN-Normen. Diese Normen sind industrieweit verbindlich. Durch die Verwendung eines genormten Codes wird sicher gestellt, dass der Code unabhängig vom Hersteller des Kodierers oder des Lesegeräts gelesen werden kann.

Beim Data Matrix Code 6 ist die Information in einer quadratischen oder rechteckigen Fläche als Muster von gleich grossen Punkten kodiert. Die Punkte sind schwarze oder weisse Kästchen, die aneinander anschliessen oder runde Punkte mit Lücken dazwischen. Die einheitliche Symbolgrösse und der feste Symbolabstand machen das Lesen des Bildes und das Dekodieren der Information sicher und den Data Matrix Code in der flächenmässigen Ausdehnung kompakt. Beim Lesen des Data Matrix Codes wird die Anordnung der Punkte innerhalb der Umrandung und im Raster der Matrix erfasst.

Der Data Matrix Code 6 enthält redundante Daten, so dass beispielsweise mit einer Reed-Solomon-Fehlerkorrektur beim ECC 200 bis zu 25 % Fehler im Codebild korrigiert werden können. Dies ist insbesondere dann von Vorteil, wenn Teile des Codebilds verdeckt oder unlesbar sind.

Alternativ dazu kann als Zugangscode vom Server 3 beispielsweise auch ein QR Code 7 generiert werden. Figur 3 zeigt ein Beispiel für einen solchen QR Code 7. Der QR Code 7 ist ebenfalls ein zweidimensionaler Barcode oder 2D-Code, wobei QR für Quick Response, also für eine schnelle Antwort steht.

Auch beim QR Code 7 bedeutet der Begriff Code nicht die geheime Verschlüsselung von Daten, sondern die Abbildung der Daten in binären Symbolen. Der QR Code 7 besteht aus einer quadratischen Matrix aus schwarzen und weissen Punkten, welche die codierten Daten im Dualsystem darstellen. Eine spezielle Markierung in drei der vier Ecken des Quadrats gibt die Orientierung vor. Im QR Code sind die Daten redundant vorhanden, so dass selbst wenn bis zu 30% des QR Codes zerstört sind, dieser dennoch richtig gelesen werden kann. Mit dem QR Code 7 können bis zu 7.089 numerische Zeichen, 4.296 alphanumerische Zeichen oder 2.953 Bytes gespeichert werden. Der Standard für den QR Code findet sich in der ISO-Norm ISO/IEC18004.

Sowohl der Data Matrix Code 6 als auch der QR Code 7 werden mit einem optischen Lesegerät 5, wie zum Beispiel einem Scanner oder einer Kamera maschinell eingelesen. Die in den Codes 6 und 7 enthaltenen Daten können dann elektronisch weiterverarbeitet werden.

Nachdem der Server 3 den Zugangscode 6 beziehungsweise 7 generiert hat und an den Zugangsknoten 2 übermittelt hat, wird in einem Schritt S7 der Zugangscode 6 beziehungsweise 7 über die Funkverbindung 8 vom Zugangsknoten 2 an das Mobiltelefon 1 gesendet.

Daraufhin wird im Schritt S8 der Zugangscode 6 beziehungsweise 7 auf dem Display 1.1 des Mobiltelefons 1 dargestellt. Der Benutzer des Mobiltelefons 1 kann nun diesen Zugangscode einer Kamera 5 zeigen, die das aufgenommene Bild mit dem Zugangscode an den Server 3 sendet (Schritt S10). Der Server 3 prüft daraufhin, ob der Zugangscode zulässig ist (Schritt S11). Dies kann beispielsweise dadurch erfolgen, dass der Server 3 den von der Kamera 5 aufgenommenen Zugangscode mit dem Zugangscode vergleicht, den der Server an das Mobiltelefon 1 gesandt hat. Falls der Zugangscode als zulässig erachtet wird (Schritt S11), teilt der Server 3 dem Zugangsknoten 2 mit, dass der Person der Zugang gewährt wird (Schritt S12). Falls der Zugangscode hingegen nicht als zulässig erachtet wird (Schritt S11), wird vom Server 3 dem Zugangsknoten 2 mitgeteilt, dass der Person der Zutritt oder die Benutzung eines bestimmten Equipments, wie beispielsweise eines Aufzugs 9 zu verweigern ist (Schritt S13). Falls der Zugang zum Aufzug 9 verweigert wird, teilt die Steuereinheit 3 dies der Aufzugssteuerung 4, die zur Steuerung des Aufzugs 9 dient, mit. Die Aufzugssteuerung 4 leitet daraufhin die entsprechenden Massnahmen ein.

Der Begriff Zugang wird im vorliegenden Kontext als generischer Begriff verstanden, der sowohl den Eintritt oder Zutritt zu einem Gebäude, einem Raum oder einer Aufzugskabine als auch die Benutzung eines Geräts oder Equipments, wie beispielsweise einem Aufzug, umfasst.

Die vorhergehende Beschreibung der Ausführungsbeispiele gemäss der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihre Äquivalente zu verlassen. So kann beispielsweise statt der Kamera auch ein Scanner verwendet werden, um den Zugangscode 6 beziehungsweise 7 auf dem Display 1.1 des Mobiltelefons 1 zu erfassen.

### Bezugszeichenliste

- 1: Mobilfunkgerät
- 1.1: Anzeige
- 1.2: Tastatur
- 2: Zugangsknoten oder Access Point
- 2.1: Antenne
- 3: Server
- 4: Aufzugsteuerung
- 5: Kamera
- 6: zweidimensionaler optischer Code
- 7: zweidimensionaler optischer Code
- 8: Funkverbindung
- 9: Aufzug
- AP: Access Point
- ID: Identifikationscode
- S1 - S13: Schritt 1 bis Schritt 13

## Patentansprüche

1. Verfahren zur Zugangskontrolle,
das folgende Schritte umfasst:
- mit einem Mobiltelefon (1) wird an einen Zugangsknoten (2) ein Identifikationscode (ID) gesendet,
- falls der Identifikationscode (ID) als gültig erkannt wird, wird vom Zugangsknoten (2) an das Mobiltelefon (1) ein Zugangscode (6; 7) gesendet und auf der Anzeige (1.1) des Mobiltelefons (1) dargestellt,
- mit einem optischen Lesegerät (5) wird der Zugangscode (6; 7) erfasst, und
- falls der Zugangscode (6; 7) als gültig erkannt wird, wird der Zugang gewährt.

2. Verfahren nach Patentanspruch 1,
bei dem der Identifikationscode (ID) die Telefonnummer des Mobiltelefons (1) ist.

3. Verfahren nach Patentanspruch 1 oder 2,
bei dem der Zugangscode (6; 7) ein zweidimensionaler optischer Code ist.

4. Verfahren nach Patentanspruch 1, 2 oder 3,
bei dem der Zugangscode (6; 7) ein Data Matrix Code (6) oder ein QR Code (7) ist.

5. Verfahren nach einem der Patentansprüche 1 bis 4,
- bei dem der Identifikationscode (ID) vom Zugangsknoten (2) an einen Steuereinheit (3) geleitet wird,
- bei dem die Steuereinheit (3) prüft, ob der Identifikationscode (ID) in einer Liste mit zulässigen Identifikationscodes enthalten ist, und falls dies der Fall ist, den Zugangscode (6; 7) an den Zugangsknoten (2) leitet.

6. Verfahren nach einem der Patentansprüche 1 bis 5, bei dem ein Aufzug (9) zur Benutzung freigegeben wird, wenn der Zugang gewährt wurde.

7. Verfahren nach einem der Patentansprüche 1 bis 6, bei dem der Zugangscode (6; 7) zeitlich beschränkt gültig ist.

8. Verfahren nach einem der Patentansprüche 1 bis 7, bei dem der Zugangscode (6; 7) nur einmal verwendbar ist.

9. Verwendung des Verfahrens nach einem der Patentansprüche 1 bis 8,
zur Zugangskontrolle zu einem Gebäude, einem Gebäudebereich oder einem Aufzug (9).

10. Vorrichtung zur Durchführung des Verfahrens zur Zugangskontrolle nach einem der Patentansprüche 1 bis 9,
- mit einem Mobiltelefon (1),
- mit einem Zugangsknoten (2), der derart ausgebildet und betreibbar ist, dass er den Identifikationscode (ID) des Mobiltelefons (1) empfangen und dem Mobiltelefon (1) den Zugangscode (6; 7) übermitteln kann,
- mit einer Steuereinheit (3), die derart ausgebildet und betreibbar ist, dass sie den Identifikationscode (ID) überprüfen und den Zugangscode (6; 7) generieren kann, und
- mit einem optischen Lesegerät (5), die mit der Steuereinheit (3) verbunden ist.

11. Vorrichtung nach Patentanspruch 10,
bei der das optische Lesegerät (5) ein Scanner oder eine Kamera ist.

12. Computerprogrammprodukt,
- das auf einem von einem Computer benutzbaren Medium gespeichert ist,
- das für den Computer lesbaren Programmcode enthält, und
- das dafür sorgt, dass der Computer das Verfahren nach einem der Patentansprüche 1 bis 8 durchführt.
